# EUROPEAN PATENT SPECIFICATION

(11) **EP 0 725 701 B1**
(45) Date of publication and mention of the grant of the patent: **28.10.1998**
(21) Application number: 94915165.8
(22) Date of filing: 13.05.1994
(51) Int. Cl.: B23D 61/12, B27B 33/06, B23D 61/00

(54) **SAW BLADE WITH BEVELLED GULLETS**
SÄGEBLATT MIT SCHRÄGEN ZAHNGRÜNDEN
LAME DE SCIE A CREUX DE DENTS BISEAUTES

(30) Priority: 12.05.1993 FI 930279 U
(43) Date of publication of application: 14.08.1996
(73) Proprietor: Oy Sawpro Finland Ltd, 40801 Vaajakoski (FI)
(72) Inventor: PERTTILÄ, Asko, FIN-16300 Orimattila (FI); MARIN, Väinö, FIN-04600 Mäntsälä (FI); PUUMLAINEN, Pertti, FIN-57130 Savonlinna (FI)
(74) Representative: Pitkänen, Hannu Alpo Antero
(86) International application number: FI9400189
(87) International publication number: WO9426451

(56) References cited:
- DE-A- 1 951 765
- DE-A- 3 127 178
- DE-C- 154 760
- DE-C- 558 907
- DE-C- 959 324
- GB-A- 834 750
- GB-A- 1 231 097
- DERWENT'S ABSTRACT, No. 92-297934/36, week 9236; & SU,A,1 692 829, (LENGD FORESTRY ACAD), 23 November 1991.

## Description

The present invention relates to a band saw blade with teeth and sideways bevelled tooth gullets.

Blade breaks due to fatigue in the blade metal are a rather common cause for blade change when sawing wood or a similar material. In band saws the blade is subjected to bending during use, thus being stressed by the repetitive bending. Commonly, a blade break in band saws occurs after a certain accumulated number of bending cycles. Blade breaks start almost invariably from the same place, which is the deepest point of the tooth gullet. This point is rather obviously the most susceptible to failure, because it is the narrowest point of the blade and thus subjected to a high tensional stress in the cutting direction of the blade when the tooth cuts wood, that is, tangentially along the blade in a bandsaw blade. The life of blades has been extended by removing the blade for stress relaxation prior to the exhaustion of the average breaking time of the blade and installing a sufficiently long relaxed blade as the replacement blade. Such blade replacements in turn cause additional work and storage costs.

According to conventional techniques, the tooth gullet has been polished using a round file, which procedure aims at extending the life of saw blades. However, the technique has failed to achieve an essential improvement in the life of saw blades.

When sawing logs with a band saw, a problem arises from the adherence of the sawdust to the sawn beam as the sawdust in cold climate freezes to the beam. This drawback also rapidly results in a dull-worn saw blade.

It is an object of the present invention to overcome the above-mentioned drawbacks and to achieve a band saw blade with a life which is several times longer than that of the prior-art band saw blades.

The goal of the invention is achieved by a band saw blade characterized by what is stated in the appended claims.

The saw blade according to the invention is characterized by having the tooth gullet sideways bevelled starting from a point which is essentially 2/3 of the blade thickness as seen from the outer perimeter of the band saw blade. Fabrication of such a blade requires no more complicated operations or work steps than simple, straight bevelling of the tooth gullet. Tests performed have proved a multiple prolonged life for such band saw blades. Blade breaks have been reduced and an additional benefit is gained therefrom that sawdust can be directed aside to the side of the wane, which is bent outward. This arrangement keeps the blade straight and prevents sawdust from adhering to the beam by freezing. A further benefit is gained therefrom that the tip speed of the blade can be increased without causing a higher frequency of blade breaks. The saw blade implementation according to the invention is suited for band sawing where the blade is continually subjected to lateral bending.

In an advantageous embodiment of the invention, the tooth gullet of a blade in a band saw or similar equipment is outward sideways bevelled starting from a point which is essentially 2/3 of the blade thickness as seen from the outer perimeter of the saw blade, whereby a longer life of the blade is attained relative to a conventional blade. In a second advantageous embodiment the tooth gullet is inward sideways bevelled starting from a point which is essentially 2/3 of the blade thickness as seen from the outer perimeter of the saw blade, whereby improved removal of sawdust formed in wood sawing is attained thus preventing the sawdust from adhering in, e.g., cold weather to the surface of beams sawn from green logs which would cause sawing defects.

In a further advantageous embodiment of the invention, the saw blade is sideways bevelled on both sides so that the bevelled surfaces meet a point which is essentially 2/3 of the blade thickness as seen from the outer perimeter of the saw blade. Also such an arrangement achieves a significant improvement in blade life.

The invention is next explained with reference to attached drawings, in which:
Figure 1 is a side view of a band saw blade according to the invention as seen from the outer perimeter of the blade;
Figure 2 is a cross-sectional view of the blade illustrated in Fig. 1 along the plane II-II; and
Figure 3 is a cross-sectional view of another saw blade according to the invention.

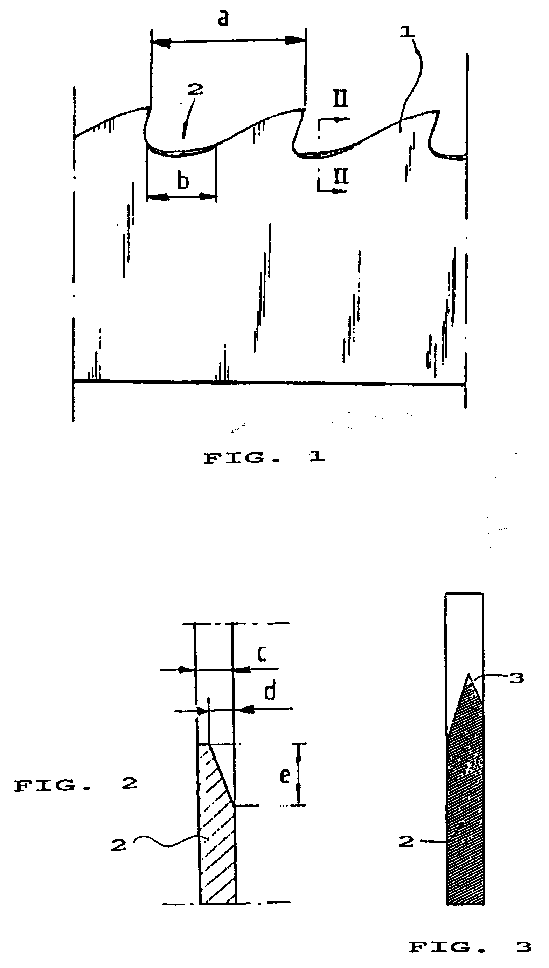

With reference to embodiment shown in Figs. 1 and 2, the edge of the band saw blade is provided with teeth 1 having the teeth pitched at a tooth spacing a of, e.g., 35 mm or any other suitable pitch. In this application the tooth gullet 2 is bevelled by essentially 2/3 of the blade thickness as seen from the outer perimeter of the saw blade. Hence, if the blade thickness c is 1 mm, for instance, the bevelled thickness d is approx. 0.7 mm. Then, the bevelled height e is 2 mm, for instance, and the circumferential bevelled length b is approx. 12 mm. These dimensions can he varied in a desired manner for different applications. Bevelling is easily made using, e.g., a round file or a grinder.

According to the second embodiment of the invention, the blade is bevelled from the inner perimeter side of the blade. Then, the dimensions used can be the same as those given above with the exception that the bevelling is made to the inner perimeter side of the saw blade.

With reference to Fig. 3, a third alternative embodiment of the band saw blade is shown. In this embodiment the tooth gullets 2 are bevelled from both sides so that the bevelled surfaces meet a point 3 which is essentially 2/3 of the blade thickness as seen from the outer perimeter of the saw blade.

The invention is not limited by the preferred embodiments described above, but rather, can be varied within the scope of the invention disclosed in the appended claims.

## Claims

1. A band saw blade with teeth (1) and sideways bevelled tooth gullets (2), **characterized** in that the tooth gullet (2) is bevelled starting from a point which is essentially 2/3 of the blade thickness (c) as seen from the outer perimeter of the saw blade.

2. A band saw blade as defined in claim 1, **characterized** in that the gullet (2) of the laterally set tooth is outward sideways bevelled starting from a point which is essentially 2/3 of the blade thickness (c) seen from the outer perimeter of the saw blade.

3. A band saw blade as defined in claim 1, **characterized** in that the gullet (2) of the laterally set tooth is inward sideways bevelled starting from a point which is essentially 2/3 of the blade thickness (c) as seen from the outer perimeter of the saw blade.

4. A band saw blade as defined in any of foregoing claims 1-3, **characterized** in that the gullets (2) of the saw blade teeth are bevelled from both sides so that the bevelled surfaces meet a point (3) which is essentially 2/3 of the blade thickness (c) as seen from the outer perimeter of the saw blade.

## Patentansprüche

1. Bandsägeblatt, das mit der Verzahnung (1) vorgesehen ist und dessen Zahnboden (2) auf die Seite hin abgeschrägt worden ist, dadurch **gekennzeichnet**, dass der Zahnboden (2) abgeschrägt ist, beginnend an der Stelle, die wesentlich 2/3 von der Dicke (c) des Sägeblattes, gemessen von der Bogenaussenseite, ist.

2. Bandsägeblatt nach Anspruch 1, dadurch **gekennzeichnet**, dass der Zahnboden (2) des abgebogenen Sägeblattes nach Aussen hin an der Stelle, die wesentlich 2/3 von der Blattdicke, gemessen von der Bogenaussenseite, abgeschrägt worden ist.

3. Bandsägeblatt nach Anspruch 1, dadurch **gekennzeichnet**, dass der Zahnboden (2) des abgebogenen Sägeblattes nach Innen hin an der Stelle, die wesentlich 2/3 von der Blattdicke, gemessen von der Bogenaussenseite, abgeschrägt worden ist.

4. Bandsägeblatt nach einem der Ansprüche 1-3 daduch **gekennzeichnet**, dass der Zahnboden (2) des Sägeblattes von den beiden Seiten so abgeschrägt ist, dass die Spitzstelle (3) der Abschrägung an der Stelle ist, die ca. 2/3 von der Sägeblattdicke (c) gemessen von der Bogenaussenseite, ist.

## Revendications

1. Une lame de scie à ruban équipée d'une dentelure (1) dont le fond (2) est biseauté vers le côté, **caractérisée** en ce que le fond de la dent est biseauté à partir du point qui est essentiellement 2/3 de l'épaisseur (c) de la lame, mesuré du côté de la courbe extérieure.

2. Une lame de scie à ruban selon la revendication 1, **caractérisée** en ce que le fond de la dent (2) de la lame de scie courbée est biseauté vers l'extérieur à partir du point qui est essentiellement 2/3 de l'épaisseur (c) de la lame, mesuré du côté de la courbe extérieure.

3. Une lame de scie à ruban selon la revendication 1, **caractérisée** en ce que le fond de la dent de la lame de scie(2) est biseauté vers l'intérieur à partir du point, qui est essentiellement 2/3 de l'épaisseur (c) de la lame, mesuré du côté de la courbe extérieure.

4. Une lame de scie selon l'une des revendications de 1 à 3, **caractérisée** en ce que le fond (2) des dents de la lame de scie est biseauté des deux côtés de façon à ce que le sommet (3) du biseautage se situe au point qui est environ 2/3 de l'épaisseur (c) de la lame, mesuré du côté de la courbe extérieure.
